(19) Europäisches Patentamt

European Patent Office

Office européen des brevets

(11) Veröffentlichungsnummer : **0 464 073 B1**

(12) **EUROPÄISCHE PATENTSCHRIFT**

(45) Veröffentlichungstag der Patentschrift :
14.06.95 Patentblatt 95/24

(21) Anmeldenummer : 90904816.7

(22) Anmeldetag : 21.03.90

(86) Internationale Anmeldenummer :
PCT/EP90/00459

(87) Internationale Veröffentlichungsnummer :
WO 90/11547 04.10.90 Gazette 90/23

(51) Int. Cl.⁶ : **G02F 1/137, C09K 19/34**

(54) **Ferroelektrische Flüssigkristallsysteme mit hoher spontaner Polarisation und guten Orientierungseigenschaften.**

(30) Priorität : 22.03.89 DE 3909354

(43) Veröffentlichungstag der Anmeldung :
08.01.92 Patentblatt 92/02

(45) Bekanntmachung des Hinweises auf die
Patenterteilung :
14.06.95 Patentblatt 95/24

(84) Benannte Vertragsstaaten :
DE GB

(56) Entgegenhaltungen :
EP-A- 0 227 419
EP-A- 0 269 062
WO-A-87/06022
PROCEEDINGS OF THE SOCIETY FOR INFOR-
MATION DISPLAY, vol. 28, no. 2, 1987, SID,
New York, US ; H. OHNISHI et al. :
"Fast-switching ferroelectric liquid-crystal mixture composed of new material with extremely large spontaneous polarization"
1988 SID INTERNATIONAL SYMPOSIUM DI-
GEST OF TECHNICAL PAPERS, 24-26 May
1988, Anaheim, California, vol. XIX, 1 issuing,
Society for Information Display, Playa de Rey,
CA, US ; S. MATSUMOTO et al. : "Large-area
video-rate multicolor ferroelectric liquid-crystal display", pp. 41-44 + 487

(73) Patentinhaber : HOECHST
AKTIENGESELLSCHAFT
D-65926 Frankfurt (DE)

(72) Erfinder : ESCHER, Claus
Amselweg 3
D-6109 Mühltal (DE)
Erfinder : DÜBAL, Hans-Rolf
Heuhohlweg 6
D-6240 Königstein (DE)
Erfinder : HARADA, Takamasa
Paul-Kornfeld-Weg 67
D-6000 Frankfurt am Main 50 (DE)
Erfinder : HEMMERLING, Wolfgang
Billtalstrasse 32
D-6231 Sulzbach (DE)
Erfinder : ILLIAN, Gerhard
Rauenthaler Weg 32
D-6230 Frankfurt am Main 80 (DE)
Erfinder : MÜLLER, Ingrid
Am Pfingstbrunnen 1
D-6238 Hofheim am Taunus (DE)
Erfinder : MURAKAMI, Mikio
New Town Building 202,
8-1, Minami 2-chome
Kakegawa-shi, Shizuoka-ken (JP)
Erfinder : OHLENDORF, Dieter
Am Kühlen Grund 4
D-6237 Liederbach (DE)
Erfinder : WINGEN, Rainer
Brunnenstrasse 1
D-6234 Hattersheim am Main (DE)

## Beschreibung

Ferroelektrische Flüssigkristallsysteme für die Verwendung in elektrooptischen Schalt- und Anzeigeelementen (Displays) sollen kurze Schaltzeiten und, zur Erzielung eines guten Kontrastverhältnisses, eine möglichst einheitliche planare Orientierung in der ferroelektrischen, insbesondere der $S_c$*-Phase aufweisen. Von Ausnahmen abgesehen bestehen solche Systeme aus einer Grundmischung von Substanzen, die mindestens eine $S_c$-Phase ausbilden, aber selbst nicht optisch aktiv sind, und optisch aktiven Dotierstoffen, die in der $S_c$-Phase der Grundmischung eine spontane Polarisation induzieren, wodurch sich die $S_c$*-Phase ausbildet, die in der Regel für den Betrieb von ferroelektrischen Displays verwendet wird. Dabei gilt, daß die Schaltzeiten umso kürzer sind, je höher die spontane Polarisation der verwendeten ferroelektrischen Mischung ist.

Es ist bekannt, daß sich eine einheitliche planare Orientierung in der $S_c$-Phase im Display durch Abkühlen aus der isotropen Phase dann besonders gut erreichen läßt, wenn die Phasenfolge der Grundmischung mit abnehmender Temperatur von isotrop → nematisch → smektisch A → smektisch C verläuft. Dies gilt auch grundsätzlich für optisch aktiv dotierte Mischungen (isotrop → N* → $S_A$* → $S_c$*).

Neben der erwünschten spontanen Polarisation induzieren optisch aktive Dotierstoffe in der N*-Phase eine schraubenförmige Verdrillung (Helix), deren Ganghöhe um so kleiner ist, je höher die Konzentration des Dotierstoffes ist. Außerdem ist die Ganghöhe der Helix temperaturabhängig.

Eine einheitliche planare Orientierung ist jedoch nur erreichbar, wenn die Ganghöhe der Helix deutlich größer und mindestens etwa fünf mal so groß ist wie die Dicke der in einem Display verwendeten Flüssigkristallschicht.

Es ist aus der Technik der herkömmlichen nematischen Displays bekannt, daß man die Ganghöhe der durch einen optisch aktiven Dotierstoff in der N*-Phase induzierten Helix für eine bestimmte Temperatur durch Zusatz eines zweiten Dotierstoffes kompensieren kann, der eine Helix mit entgegengesetztem Drehsinn induziert (DE-A-2827471). Wegen der in der Regel sehr unterschiedlichen Temperaturabhängigkeit der Helixganghöhe bei einzelnen Dotierstoffen ist auf diesem Weg normalerweise keine Kompensation über ein größeres Temperaturintervall möglich. Bei Flüssigkristallsystemen mit hoher spontaner Polarisation im Absolutwert ab etwa 35 nC cm$^{-2}$, die optisch aktive Dotierstoffe in verhältnismäßig hoher Konzentration enthalten, macht sich die Schwierigkeit der Helixkompensation über größere Temperaturbereiche besonders bemerkbar. Oben beschriebene Zwei-Dotierstoff-Systeme müssen, selbst im Falle einer bestmöglichst durchgeführten Kompensation sehr langsam durch die cholesterische (N*)-Phase abgekühlt werden, damit sich eine gute planare Orientierung in der $S_c$*-Phase ergibt. Dies erfordert viel Zeit und einen hohen apparativen Aufwand und ist dementsprechend teuer.

Die aufgezeigten Nachteile, insbesondere die Notwendigkeit des langsamen Abkühlens durch die cholesterische Phase, werden durch die erfindungsgemäße Flüssigkristallmischung vermieden.

Gegenstand der Erfindung ist daher eine Flüssigkristallmischung, die in einem Temperaturintervall, das Raumtemperatur (25°C) umfaßt, und das vorzugsweise mindestens einen Bereich von +10 bis +50°C umfaßt, eine ferroelektrische, insbesondere eine $S_c$*-Phase, und in einem Temperaturintervall oberhalb der ferroelektrischen Phase eine vorzugsweise mindestens 4°C breite cholesterische Phase aufweist; die in der ferroelektrischen Phase bei Raumtemperatur (25°C) eine spontane Polarisation von mindestens 35 nC cm$^{-2}$ hat; und die mehrere optisch aktive Verbindungen enthält. Sie ist dadurch gekennzeichnet, daß sie mindestens drei optisch aktive Verbindungen enthält, die in der cholesterischen Phase nicht alle eine Verdrillung (Helix) gleichen Vorzeichens induzieren, und deren relative Konzentrationen so gewählt sind, daß die in der Summe resultierende Helixganghöhe in der gesamten cholesterischen Phase nicht weniger als 10 μm absolut beträgt.

Der Drehsinn, d. h. das Vorzeichen der resultierenden Helix kann dabei rechts- (+) oder linkshändig (-) sein, kann in der cholesterischen Phase das Vorzeichen wechseln, wobei der Absolutwert der Ganghöhe 10 μm nicht unterschreiten darf. Dies gilt für Displays, bei denen die Dicke der Flüssigkristallschicht, wie meist üblich, ca. 2 μm beträgt. Bei dickeren Schichten, wie sie z. B. bei im Guest-Host-mode betriebenen Displays gebräuchlich sind, muß die Ganghöhe entsprechend größer sein. Ebenso gelten solche erhöhten Anforderungen für den Fall, daß als den Flüssigkristall orientierende Schicht nicht ein organisches Polymermaterial sondern schräg aufgedampftes SiO oder $SiO_2$ (bzw. eine Mischung von SiO und $SiO_2$) verwendet wird.

In diesen Zellen mit größerer Dicke der Flüssigkristallschicht oder mit SiO/$SiO_2$-Orientierungsschichten sind die erfindungsgemäßen Mischungen mit besonderem Vorteil einzusetzen, da sich die hier erforderliche Mindestganghöhe der Helix in der cholesterischen Phase bei Mischungen mit hoher spontaner Polarisation durch gegenseitige Helixkompensation mit zwei optisch aktiven Verbindungen nach dem Stand der Technik nicht erzielen läßt.

Um eine hohe spontane Polarisation bei möglichst geringem Gehalt an optisch aktiven Bestandteilen in der Mischung zu erhalten, sollen alle optisch aktiven Bestandteile, die zu mehr als 10% zur spontanen Polarisation beitragen, jeweils eine spontane Polarisation gleichen Vorzeichens induzieren.

Man setzt zweckmäßig möglichst kleine Mengen von Dotierstoffen zu, die eine hohe spontane Polarisation gleichen Vorzeichens induzieren.

Da optisch aktive Verbindungen in Mischungen der erfindungsgemäßen Art vielfach andere Eigenschaften, z.B. die Viskosität in der ferroelektrischen Phase, ungünstig beeinflussen, bestehen solche Mischungen vorzugsweise zu mindestens 50 Mol-% bezogen auf die Gesamtmischung aus flüssigkristallinen Verbindungen, die nicht optisch aktiv sind.

Besonders günstig ist es, wenn die Mischungen zwischen der cholesterischen (N*)-Phase und der ferroelektrischen $S_C$*-Phase eine orthogonale smektische Phase haben. Vorzugsweise stellt sich der Phasenverlauf als I → N* → $S_A$* → $S_C$* dar.

Zur Herstellung der erfindungsgemäßen Mischungen verwendet man optisch aktive Verbindungen, deren spontane Polarisation bei einer bestimmten Temperatur, insbesondere bei Raumtemperatur (25°C), in der ferroelektrischen Phase und deren Verdrillung im gesamten Bereich der cholesterischen Phase bestimmt worden sind. Da in der Praxis normalerweise Mischungen verwendet werden, die zu einem großen Teil aus Gemischen von nicht optisch aktiven Verbindungen bestehen, bestimmt man die Polarisation und die Verdrillung der in Frage kommenden optisch aktiven Dotierstoffe nach Betrag und Vorzeichen in Testmischungen oder direkt in für den Einsatz vorgesehenen Mischungen. Für nicht zu hohe Konzentrationen an Dotierstoffen gilt dann in sehr guter Nährung $P = P^o \cdot c$ und $Z^{-1} = HTP \cdot c$, wobei die Symbole folgende Bedeutung haben: P = spontane Polaristion, $P^o$ = Polarisationsvermögen, Z = Ganghöhe der Helix, HTP = Verdrillungsvermögen und c = Konzentration als Molenbruch der untersuchten optisch aktiven Verbindung.

Da die vorgenannten Beziehungen in guter Näherung auch gelten, wenn erfindungsgemäß mehrere optisch aktive Verbindungen einer Grundmischung zugesetzt werden, lassen sich diese Beziehungen verallgemeinern zu $P = \Sigma_i P_i^o \cdot c_i$ und $Z^{-1} = \Sigma_i HTP_i \cdot c_1$, wobei der Index i die verschiedenen optisch aktiven Verbindungen bezeichnet.

Für erfindungsgemäße Mischungen gilt dann die Forderung

$$\left| P\,(25°C) \right| \;=\; \left| \Sigma_i P_i^o\,(25°C)\,c_i \right| \geqq 35 \text{ nCcm}^{-2} \quad (1)$$

und $\left| Z^{-1}\,(T) \right| = \left| \Sigma_i HTP_i(T) c_i \right| \leqq 1/10 \; \mu m^{-1}$ für alle Temperaturen in der cholesterischen Phase.

Die zweite Bedingung erfordert eine Ganghöhenkompensation in der cholesterischen Phase und zerfällt i.a. in die Einzelforderungen

$$\left| Z^{-1}(T_{SN}) \right| \leqq 1/10 \; \mu m^{-1} \quad (2)$$
$$\left| Z^{-1}(T_{NI}) \right| \leqq 1/10 \; \mu m^{-1} \quad (3)$$

wobei $T_{SN}$ bzw. $T_{NI}$ Temperaturen an der Grenze zur smektischen bzw. zur isotropen Phase bedeuten.

Die Forderungen (1), (2) und (3) sind durch Verwendung von mindestens drei optisch aktiven Verbindungen zu erfüllen, die nicht sämtlich eine Helix desselben Drehsinns induzieren, also nicht sämtlich gleiches Vorzeichen der HTP haben. Vorzugsweise sollen die $P^o$-Werte der einzelnen Verbindungen alle gleiches Vorzeichen haben und betragsmäßig groß sein, damit mit kleinen Konzentrationen hohe P-Werte erreicht werden.

Danach lassen sich aus einer Vielzahl von Dotierstoffen, deren Parameter bekannt sind, solche auswählen, die für die erfindungsgemäßen Mischungen geeignet sind. Führen bei der Vorauswahl die Rechnungen (1), (2) und (3) zu unphysikalischen oder ungeeignet großen Werten für $c_i$, so müssen weitere Komponenten hinzugenommen werden, oder man muß eine andere Kombination von Dotierstoffen wählen.

Die folgenden Beispiele sollen die Erfindung erläutern ohne sie einzuschränken. Alle Prozentangaben stellen Molprozente dar.

**Beispiel 1**

In einer flüssigkristallinen Basismischung A bestehend aus

| | |
|---|---|
| 5-Octyloxy-2-[4-hexyloxyphenyl]pyrimidin | 15,1 % |
| 5-Octyloxy-2-[4-octyloxyphenyl]pyrimidin | 5,0 % |
| 5-Octyloxy-2-[4-butyloxyphenyl]pyrimidin | 16,6 % |
| 5-Octyloxy-2-[4-decyloxyphenyl]pyrimidin | 9,2 % |
| 5-Octyloxy-2-[4-dodecyloxyphenyl]pyrimidin | 9,2 % |
| 5-Octyloxy-2-[4-dodecyloxyphenyl]pyrimidin | 13,5 % |
| trans-4-pentyl-cyclohexancarbonsäure-[4-(5-decyl-pyrimidin-2-yl)]-phenylester | 21,4 % |
| 4-[5-Octylpyrimidin-2-yl]phenylhexancarbonsäureester | 5,0 % |
| 4-(Nonyloxypyrimidin-5-yl)-phenyl-2-chlor-4-methyl-pentansäureester | 5,0 % |

wurden die Dotierstoffe

(R)-4-(5-n-Octyloxypyrimidin-2-yl)-phenyl-(2,2 pentamethylen-1,3-dioxolan-4-yl)methylether     (I)
(2R,3R)-3-Propyl-oxiran-2-carbonsäure-[4-(2-octyloxypyrimidin-5-yl)phenyl]-ester     II
und
(R)-Tetrahydrofuran-2-carbonsäure-[4-(5-n-octylpyrimidin-2-yl)-phenyl]ester     III
auf Polarisations- und Verdrillungsvermögen untersucht.

Dabei wurden folgende Meßwerte gefunden:

Dotierstoff I:
$HTP(T_{SN})$ = -7 µm$^{-1}$, $HTP(T_{NI})$ = -10 µm$^{-1}$, $|P\circ(25°C)|$ < 20nC/cm$^2$
Dotierstoff II:
$HTP(T_{SN})$ = 7,2 µm$^{-1}$, $HTP(T_{NI})$ = 6.7 µm$^{-1}$, $P\circ(25°C)$ = 600 nC/cm$^2$
Dotierstoff III:
$HTP(T_{SN})$ = 0.8 µm$^{-1}$, $HTP(T_{NI})$ = 1.6 µm$^{-1}$, $P\circ(25°C)$ = 120 nC/cm$^2$
Die weiter oben angeführten Rechnungen ergaben für eine mit 4,5 % (I), 4,35 % (II) und 8,3 % (III) dotierte Basismischung die folgenden theoretischen Werte:

$$Z^{-1}(T_{SN}) = 0.0065 \text{ µm}^{-1}$$
$$Z^{-1}(T_{NI}) = -0.026 \text{ µm}^{-1}$$
$$P(25°C) = 36 \text{ nC/cm}^2$$

Aufgrund dieser Ergebnisse wurde die Dotierung mit den genannten Konzentrationen vorgenommen. Die aktuellen Messungen ergaben dann

| T/°C | 73 | 74 | 75 | 76 | 77 | 78 | 79 | 80 | 81 |
|---|---|---|---|---|---|---|---|---|---|
| Z/µm | + 22 | + 29 | + 53 | > 100 | ∞ | \| > 100\| | - 42 | - 32 | - 25 |

sowie $P(25°C)$ = 38 nC/cm$^2$. Die ferroelektrische Mischung besitzt die Phasensequenz K-8 S$_C$* 66 S$_A$* 73 N* 81 I (Übergangstemperaturen in °C).

**Beispiele 2 und 3**

In einer flüssigkristallinen Basismischung B bestehend aus

| | |
|---|---|
| 5-Octyl-2-[4-hexyloxyphenyl]pyrimidin | 17,7 % |
| 5-Octyl-2-[4-octyloxyphenyl]pyrimidin | 15,6 % |

| 5-Octyl-2-[4-decyloxyphenyl]pyrimidin | 11,8 % |
| 5-Octyloxy-2-[4-butyloxyphenyl]pyrimidin | 11,7 % |
| 5-Octyloxy-2-[4-hexyloxyphenyl]pyrimidin | 11,1 % |
| 5-Octyloxy-2-[4-octyloxyphenyl]pyrimidin | 5,1 % |
| 5-Octyloxy-2-[4-decyloxyphenyl]pyrimidin | 9,3 % |
| trans-4-pentyl-cyclohexancarbonsäure-[4-(5-dedocyl-pyrimidin-2-yl)]-phenylester | 17,5 % |

wurden die Dotierstoffe I, II und

(2S,3S)-2-[4-(5-Octyl-pyrimidin-2-yl) phenyloxy]methyl-3-butyl-oxiran     IV

(4R,5R)-4-(5-n-Octyl-pyrimidin-2-yl)-phenyl-2,2-dimethyl-5-ethyl-1,3-dioxolan-4-carbonsäureester     IV

auf Polarisations- und Verdrillungsvermögen untersucht.

Dabei wurden folgende Meßwerte gefunden:

| Dotierstoff | I | II | IV | V |
|---|---|---|---|---|
| $HTP(T_{SN})/\mu m^{-1}$ | - 7.0 | + 5.5 | - 1.9 | - 1.1 |
| $HTP(T_{NI})/\mu m^{-1}$ | - 8.6 | + 5.4 | - 1.2 | - 4.5 |
| $P^{\circ}(25^{\circ}C)/$ $nC/cm^2$ | | < 15 | + 500 | + 95 | + 230 |

Aufgrund dieser Meßergebnisse wurden zwei verschiedene Dotierstoffkombinationen ausgewählt:

Beispiel 2: 5.4 % (II), 13.1 % (IV), 1.5 % (V)

Beispiel 3: 4.7 % (I), 9.0 % (II), 8.0 % (IV)

Die Berechnung der resultierenden Ganghöhen und spontanen Polarisationen nach den oben angeführten Vorschriften ergaben folgende theoretischen Werte:

| Beispiel | 2 | 3 |
|---|---|---|
| $Z^{-1}(T_{SN})/\mu m^{-1}$ | + 0.032 | + 0.014 |
| $Z^{-1}(T_{NI})/\mu m^{-1}$ | + 0.067 | - 0.014 |
| $P(25^{\circ}C)/nC/cm^2$ | + 43.9 | + 52.5 |

Aufgrund dieser Ergebnisse wurden die Dotierungen der Basismischung B mit den genannten Konzentrationen vorgenommen. Die Messungen ergaben dann im einzelnen:

Beispiel 2:

Phasenbereich: K-4 $S_C$* 64 $S_A$* 69 N* 80 I

Polarisation: P(25°C) = + 46.5 nC/cm²

Ganghöhe:

| T/°C | 69 | 70 | 71 | 72 | 73 | 74 | 75 | 76 |
|---|---|---|---|---|---|---|---|---|
| Z/µm | + 12 | + 15 | + 16 | + 17 | + 17 | + 17 | + 18 | + 17 |

| T/°C | 77 | 78 | 79 | 80 |
|---|---|---|---|---|
| Z/µm | + 16 | + 15 | + 15 | + 14 |

Beispiel 3:

Phasenbereich: K-4 $S_C$* 60 $S_A$* 71 N* 77 I
Polarisation: P(25°C) = + 54 nC/cm²
Ganghöhe:

| T/°C | 71 | 72 | 73 | 74 | 75 | 76 | 77 |
|---|---|---|---|---|---|---|---|
| Z/µm | + 41 | + 49 | + 62 | >+ 100 | ∞ | > 100 | > 80 |

**Beispiel 4**

In die flüssigkristalline Basismischung B wurden die Dotierstoffe I, II und IV mit den jeweiligen Molprozenten 3.43 %, 6.56 % und 5.83 % gelöst.

Die relativen Anteile wurden aufgrund der in den Beispielen 2 und 3 angegebenen HTP-Werte der drei einzelnen Dotierstoffe in der Mischung B ausgewählt.

Die Berechnung der resultierenden Ganghöhen und spontanen Polarisationen ergab folgende Werte:

$$Z^{-1}(T_{SN}) = + 0.01 \ 1m^{-1}$$
$$Z^{-1}(T_{NI}) = - 0.01 \ \mu m^{-1}$$
$$P(25°C) = 38 \ nC/cm^2$$

Die experimentellen Befunde ergaben folgendes:
Phasenbereich: K-5 $S_C$* 65 $S_A$* 72 N* 85 I
Polarisation: P(25°C) = + 40 nC/cm²
Ganghöhe:

| T/°C | 72 | 73 | 74 | 75 | 76 | 77 | ≥ 78 |
|---|---|---|---|---|---|---|---|
| Z/µm | + 13 | + 17.5 | + 21 | + 28 | + 37 | + 46 | > 50 |

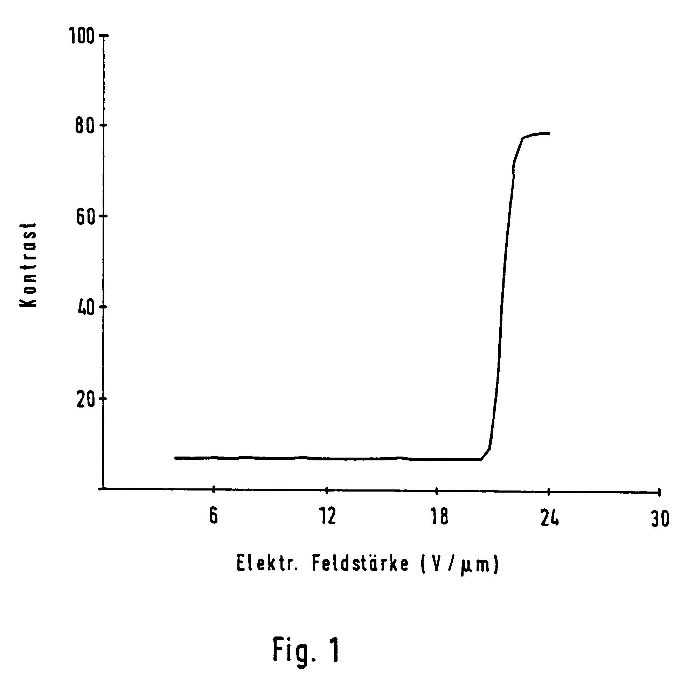

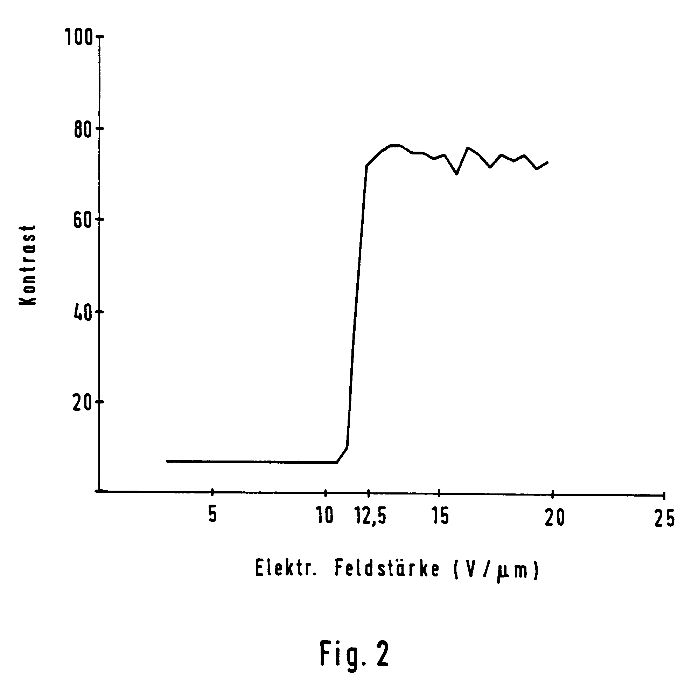

Die erfindungsgemäße Mischung wurde in eine Testzelle (Schichtdicke 2 µm) gefüllt, die zuvor zum Zwecke der Orientierung des Flüssigkristalls beidseitig mit SiO unter einem Winkel von 83 % schrägbedampft worden war. Nach Abkühlung aus der isotropen Phase ergab sich unabhängig von der Kühlrate eine hervorragende, einheitliche Orientierung. Beim Beschalten mit bipolaren Pulsen wurden bei Temperaturen von 25 °C und 45 °C die in den Figuren 1 und 2 gezeigten elektrooptischen Kennlinien gemessen. Der hohe Kontrast beruht auf der guten und einheitlichen Orientierung des flüssigkristallinen Materials.

Fig. 1    Elektrooptische Kontrastkurve bei Addressierung mit einem bipolaren Puls von 100 µm Pulsbreite bei einer Temperatur von 25 °C. (Es ist der Kontrast gegen die elektrische Feldstärke aufgetragen.)

Fig. 2    Wie Abb. 1, jedoch bei einer Temperatur von 45 °C.

**Patentansprüche**

1.    Flüssigkristallmischung, die in einem Temperaturintervall, das Raumtemperatur (25°C) umfaßt, eine ferroelektrische Phase, insbesondere eine smektische C*-Phase, und in einem Temperaturintervall oberhalb der ferroelektrischen Phase eine cholesterische Phase aufweist, in der ferroelektrischen Phase bei Raumtemperatur (25°C) eine spontane Polarisation von betragsmäßig mindestens 35 nC cm⁻² hat, und mehrere optisch aktive Verbindungen enthält, dadurch gekennzeichnet, daß die Mischung mindestens

6

drei verschiedene optisch aktive Verbindungen enthält, die in der cholesterischen Phase nicht alle eine Verdrillung gleichen Vorzeichens induzieren, und deren relative Konzentrationen so gewählt sind, daß die in der Summe resultierende Helixganghöhe in der gesamten cholesterischen Phase nicht weniger als 10 µm absolut beträgt.

2. Flüssigkristallmischung nach Anspruch 1, dadurch gekennzeichnet, daß die cholesterische Phase eine Breite von mindestens 4°C aufweist.

3. Mischung nach Anspruch 1 oder 2, dadurch gekennzeichnet, daß alle darin enthaltenen optisch aktiven Verbindungen, die zu mehr als 10 % zur gesamten spontanen Polarisation beitragen, jeweils eine spontane Polarisation des gleichen Vorzeichens induzieren.

4. Mischung nach Anspruch 1, 2 oder 3, dadurch gekennzeichnet, daß sie neben den optisch aktiven Verbindungen mindestens 50 Mol-% bezogen auf die Gesamtmischung an nicht optisch aktiven Verbindungen enthält.

5. Mischung nach Anspruch 2, 3 oder 4, dadurch gekennzeichnet, daß sie zwischen der ferroelektrischen und der cholesterischen Phase eine orthogonale smektische Phase, insbesondere eine smektische A*-Phase aufweist.

6. Mischung nach einem der Ansprüche 1 bis 5, dadurch gekennzeichnet, daß die Phasenfolge I - N* - $S_A$* - $S_C$* lautet.

7. Elektrooptisches Schalt- und Anzeigeelement enthaltend eine Flüssigkristallmischung nach einem der Ansprüche 1 bis 6.

8. Verwendung von Flüssigkristallmischungen nach einem der Ansprüche 1 bis 6 als Anzeigemedium in elektrooptischen Schalt- und Anzeigeelementen.

## Claims

1. A liquid-crystal mixture which has a ferroelectric phase, in particular a smectic C* phase, in a temperature range which includes room temperature (25°C), and a cholesteric phase in a temperature range above the ferroelectric phase, has a spontaneous polarization with a value of at least 35 nC cm$^{-2}$ in the ferroelectric phase at room temperature (25°C), and contains several optically active compounds, wherein the mixture contains at least three different optically active compounds which do not all induce twist of the same sign in the cholesteric phase, and whose relative concentrations are selected so that the total resultant helix pitch throughout the cholesteric phase is not less than 10 µm in absolute terms.

2. A liquid-crystal mixture as claimed in claim 1, wherein the cholesteric phase has a width of at least 4°C.

3. A mixture as claimed in claim 1 or 2, wherein each of the optically active compounds present therein, which make up more than 10% of the total spontaneous polarization, induce a spontaneous polarization of the same sign.

4. A mixture as claimed in claim 1, 2 or 3, which contains, in addition to the optically active compounds, at least 50 mol-%, relative to the total mixture, of non-optically active compounds.

5. A mixture as claimed in claim 2, 3 or 4, which has an orthogonal smectic phase, in particular a smectic A* phase, between the ferroelectric phase and the cholesteric phase.

6. A mixture as claimed in any one of claims 1 to 5, wherein the phase sequence is I - N* - $S_A$* - $S_C$*.

7. An electrooptical switching and display element containing a liquid-crystal mixture as claimed in any one of claims 1 to 6.

8. The use of a liquid-crystal mixture as claimed in any one of claims 1 to 6 as display medium in electrooptical switching and display elements.

7

**Revendications**

1.  Mélange de cristaux liquides, qui dans un intervalle de températures comprenant la température ambiante (25°C), présente une phase ferroélectrique, notamment une phase smectique C\*, et dans un intervalle de températures supérieur à la phase ferroélectrique, une phase cholesterique, qui dans la phase ferroélectrique à température ambiante (25°C) a une polarisation spontanée (selon quantités) d'au moins de 35 nC cm$^{-2}$ et contient plusieurs composés optiquement actifs, caractérisé en ce que le mélange contient au moins trois composés optiquement actifs différents, qui dans la phase cholestérique n'induisent pas tous de torsion de même signe et dont les concentrations relatives sont choisies de telle façon que la hauteur résultante du pas de l'hélice dans la totalité de la phase cholestérique, n'est pas inférieure à 10 μm absolu.

2.  Mélange de cristaux liquides selon la revendication 1, caractérisé en ce que la phase cholestérique présente une largeur d'au moins 4°C.

3.  Mélange selon la revendication 1 ou 2, caractérisé en ce que tous les composés optiquement actifs qu'elle contient, qui contribuent à l'ensemble de la polarisation spontanée à plus de 10%, induisent chaque fois une polarisation spontané du même signe.

4.  Mélange selon la revendication 1, 2 ou 3, caractérisé en ce qu'il contient outre les composés optiquement actifs au moins 50 moles-%, par rapport à la totalité du mélange, de composés optiquement inactifs.

5.  Mélange selon la revendication 2, 3 ou 4, caractérisé en ce qu'il présente entre la phase ferroélectrique et la phase cholestérique une phase smectique orthogonale, notamment une phase smectique A\*.

6.  Mélange selon l'une des revendications 1 à 5, caractérisé en ce que la série des phases est I - N\* - S$_A$\* - S$_C$\*.

7.  Composant électro-optique de commutation et d'affichage contenant un mélange de cristaux liquies selon l'une des revendications 4 à 6.

8.  Utilisation de mélanges de cristaux liquides selon l'une des revendications 1 à 6 en tant que milieu d'affichage dans les composants électro-optiques de commutation et d'affichage.

Fig. 1

Fig. 2